(19) **Europäisches Patentamt**

**European Patent Office**

**Office européen des brevets**

(11) **EP 1 478 942 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(21) Anmeldenummer: **02782695.7**

(22) Anmeldetag: **27.09.2002**

(51) Int Cl.:
**G01S 13/60** *(2006.01)*      **G01S 7/40** *(2006.01)*
**G01S 13/93** *(2006.01)*      **H01Q 19/06** *(2006.01)*
**H01Q 15/02** *(2006.01)*

(86) Internationale Anmeldenummer:
**PCT/DE2002/003697**

(87) Internationale Veröffentlichungsnummer:
**WO 2003/073125 (04.09.2003 Gazette 2003/36)**

(54) **RADARSENSOR FÜR KRAFTFAHRZEUGE MIT EINER AUF DIE STRASSENOBERFLÄCHE GERICHTETEN ANTENNENNEBENKEULE**

RADAR SENSOR FOR MOTOR VEHICLES WITH ANTENNA SIDELOBE POINTING AT THE ROAD SURFACE

DETECTEUR RADAR POUR VEHICULES MOTORISES AVEC UN LOBE SECONDAIRE DIRIGE VERS LA SURFACE DE LA ROUTE

(84) Benannte Vertragsstaaten:
**DE ES FR GB IT SE**

(30) Priorität: **22.02.2002 DE 10207437**

(43) Veröffentlichungstag der Anmeldung:
**24.11.2004 Patentblatt 2004/48**

(73) Patentinhaber: **ROBERT BOSCH GMBH**
**70442 Stuttgart (DE)**

(72) Erfinder:
• **BEEZ, Thomas**
  **74189 Weinsberg (DE)**
• **LEHRE, Klaus**
  **76316 Malsch (DE)**

(56) Entgegenhaltungen:
**EP-A- 1 118 872**      **WO-A-97/02496**
**WO-A-03/062852**      **DE-A- 4 129 580**
**DE-A- 19 941 931**      **US-A- 4 769 646**

**Beschreibung**

STAND DER TECHNIK

Die Erfindung betrifft einen Radarsensor für Kraftfahrzeuge, mit einer Sende- und Empfangseinrichtung, deren Richtcharakteristik mehrere Keulen aufweist, von denen mindestens eine parallel zur Fahrbahnoberfläche gerichtet ist. Weiterhin bezieht sich die Erfindung auf verschiedenartige Verwendungen eines solchen Radarsensors.

Radarsensoren werden bei Kraftfahrzeugen beispielsweise im Rahmen eines sogenannten ACC-Systems (Adaptive Cruise Control) eingesetzt und dienen innerhalb eines solchen Systems dazu, den Abstand zu einem vorausfahrenden Fahrzeug zu messen, so daß die Geschwindigkeit des eigenen Fahrzeugs an die des vorausfahrenden Fahrzeugs angepaßt werden kann. Eine Darstellung eines solchen ACC-Systems findet sich beispielsweise in Winner: "Adaptive Cruise Control " in Automotive Electronics Handbook, Ronald K. Jurgen (Hrsg.), 2. Auflage, Mac Graw-Hill (1999) Kapitel 30.1. Das Prinzip der Abstandsmessung beruht auf auf einer Messung der Laufzeit des Radarechos. Der Döppler-Effekt gestattet darüber hinaus eine direkte Messung der Relativgeschwindigkeit des vorausfahrenden Fahrzeugs oder eines anderen Zielobjekts, das Radarwellen reflektiert. Der Radarsensor des ACC-Systems arbeitet typischerweise mit elektromagnetischen Wellen mit einer Frequenz von 77 GHz.

Weiterhin werden Radarsensoren bei Kraftfahrzeugen auch als Rundumfeld-Sensoren eingesetzt, die auch den Raum neben und hinter dem eigenen Fahrzeug überwachen. Diese Radarsensoren arbeiten beispielsweise mit einer Frequenz von 24 GHz. Der Anwendungsbereich der Erfindung ist nicht auf einen bestimmten Bereich des elektromagnetischen Spektrums begrenzt und kann beispielsweise auch sichtbares Licht einschließen.

Die Sende- und Empfangseinrichtung des Radarsensors weist je nach Ausführungsform entweder getrennte Antennen für das Senden des Radarsignals und für den Empfang des Echos oder eine gemeinsame Antenne für Senden und Empfang auf.

Für eine Winkelortung der erfaßten Objekte wird häufig ein Mehrstrahlradar eingesetzt, bei dem die Sende- und Empfangseinrichtung mehrere Sende- und Empfangskeulen aufweist, die gegeneinander winkelversetzt sind, so daß sie einen größeren Winkelbereich um die Geradeaus-Richtung des Fahrzeugs herum abdecken. Durch getrennte Auswertung der von den verschiedenen Empfangskeulen empfangenen Radarechos ist es dann möglich, die Richtung d.h. den Azimutwinkel des Zielobjekts zu bestimmen. Da die als Abstandssensor bei Kraftfahrzeugen eingesetzten Radarsensoren vornehmlich zur Erfassung von vorausfahrenden Fahrzeugen auf der eigenen Spur und auf Nebenspuren dienen, liegen die Achsen der mehreren Sende- und Empfangskeulen in einer gemeinsamen Ebene etwa parallel zur Fahrbahnoberfläche

Bei einer bekannten Ausführungsform eines Mehrstrahl-Radarsensors ist jeder Sende- und Empfangskeule eine eigene Patch-Antenne als Sender/Empfänger zugeordnet. Die Patch-Antennen sind seitlich versetzt zueinander in der Brennebene einer gemeinsamen optischen Linse angeordnet. Durch die Linse, die aus einem für die Radarwellen transparenten dielektrischen Material, z.B. aus Kunststoff besteht, werden die von jedem Patch ausgesandten Radarwellen gebündelt und in eine Richtung abgestrahlt, die durch die Lage des Patches in der Brennebene bestimmt ist. Beim Empfang dient dieselbe Linse dazu, das aus der betreffenden Empfangskeule empfangene Echo wieder auf das zugehörige Patch zu fokussieren. Das Senden und der Empfang können je nach Ausführungsform des Sensors zeitgleich oder zeitversetzt im Wechsel erfolgen.

Aus der WO 97/02496 ist ein mehrstrahliger Kraftfahrzeug-Radarsensor bekannt, der drei Antenne-Feeds aufweist, die zentrisch so angeordnet sind, dass diese im Strahlengang einer dielektrischen Linse liegen und 3 Strahlungskeulen bilden, die den Bereich vor dem Fahrzeug erfassen und horizontal nebeneinander angeordnete Bereiche erfassen.

Aus der EP 1 118 872 A2 ist ein Millimeterwellenradar für Kraftfahrzeuge bekannt, das eine parallel zur Fahrbahnoberfläche ausgerichtete Strahhmgskeute aufweist und eine weitere, schräg nach unter in Richtung Fahrbahnoberfläche ausgerichtete Sttahluagskeule aufweist. Zur Verminderung von Stötrungen sind im Randbereich des Radarsensors Abschirmbleche angeordnet, die eine unerwünschte Nebenkeule unterdrücken.

Aus der DE 199 41 931 A1 ist ein Gehäuse für einen mehrstrahligen Kraftfahrzeug-Radarsensor bekannt, der 3 Antennenelemente aufweist, die auf einer Grundplatte derart angeordnet sind, dass diese in etwa im Brennpunkt der dielektrischen Linse liegen.

Aus der DE 4129 580 A1 ist ein Mikrowellenmodul bekannt, das 2 Sende- und Empfangsvorrichtungen aufweist, deren Hauptstrahlungsrichtungen jeweils schräg in einem 45°-Winkel auf die Fahrbahnoberfläche gerichtet sind um mittels des Dopplereffektes die Geschwindigkeit des Fahrzeugs zu bestimmen.

AUFGABE, LÖSUNG UND VORTEILE DER ERFINDUNG

Aufgabe der Erfindung ist es, die Anwendungsmöglichkeiten eines Radarsensors der eingangs genannten Art zu erweitern.

Diese Aufgabe wird bei einem Radarsensor mit mindestens einer parallel zur Fahrbahnoberfläche gerichteten Keule dadurch gelöst, daß mindestens eine andere Keule schräg auf die Fahrbahnoberfläche gerichtet ist.

Da die Fahrbahnoberfläche stets eine gewisse Rauhigkeit aufweist, bildet sie eine Vielzahl kleiner Reflektoren, durch die ein Teil der auftreffenden Radarstrahlung wieder zum Radarsensor reflektiert wird. Auch bei herkömmlichen Radarsensoren wird als "Hintergrund" stets ein schwaches Echo von der Fahrbahnoberfläche empfangen, doch ist dieses Echo relativ schwach, da die leicht divergente Radarkeule erst in relativ großem Abstand vom Sensor so weit aufgeweitet ist, daß sie die Fahrbahnoberfläche trifft. Bei dem erfindungsgemäßen Radarsensor wird nun dadurch, daß eine der Keulen schräg auf die Fahrbahnoberfläche gerichtet ist und somit früher die Fahrbahnoberfläche trifft, ein stärkeres und deutlicheres Radarecho von der Fahrbahnoberfläche erhalten. Dieses Radarecho stellt eine Zusatzinformation dar, die sich in den Steuerungs- und Regelsystemen moderner Kraftfahrzeuge auf vielfältige Weise nutzen läßt

Beispielsweise kann das Radarecho von der Fahrbahnoberfläche für eine direkte Messung der Geschwindigkeit des Fahrzeugs über Grund genutzt werden. Bisher wird die Eigengeschwindigkeit eines Kraftfahrzeugs generell mit Hilfe von Raddrehzahlsensoren gemessen. Für die Umrechnung der Raddrehzahl in die Fahrzeuggeschwindigkeit muß jedoch der effektive Raddurchmesser bekannt sein, der sich aufgrund von Schwankungen des Reifendruckes, der Zuladung etc. nicht genau bestimmen läßt. Außerdem kann die Geschwindigkeitsmessung durch Radschlupf verfälscht werden. Die Geschwindigkeitsmessung mit Hilfe von Raddrehzahlsensoren versagt deshalb vor allem in Fahrsituationen, in denen einzelne oder sämtliche Räder des Fahrzeugs einen beträchtlichen Schlupf aufweisen oder blockieren. Gerade in solchen Situationen wäre jedoch oft eine genaue Kenntnis der Geschwindigkeit des Fahrzeugs über Grund wichtig, etwa im Rahmen einer elektronischen Regelung der Fahrdynamik oder bei der Aufzeichnung des Geschehens unmittelbar vor einem Unfall.

Die Erfindung ermöglicht, etwa durch Ausnutzung des Doppler-Effektes, eine unabhängige, von solchen Störeinflüssen unverfälschte Messung der Geschwindigkeit des Fahrzeugs über Grund, durch die die Funktionssicherheit und Genauigkeit einer Vielahl von Systemen verbessert werden kann, die eine Messung der Fahrzeuggeschwindigkeit erfordern. Durch Kombination der Radarmessung mit der herkömmlichen Messung mittels Raddrehzahlsensoren wird überdies eine gegenseitige Fehlerüberwachung der verschiedenen Meßsysteme ermöglicht.

Zwar ist das Prinzip, die Geschwindigkeit eines Fahrzeugs über Grund mit Hilfe eines Radarsensors zu messen, als solches bekannt, doch besteht der Vorteil der Erfindung darin, daß diese Geschwindigkeitsmessung keinen zusätzlichen Radarsensor erfordert, sondern durch geringfügige Modifikation eines ohnehin am Fahrzeug vorhandenen Radarsensors erreicht wird, der an sich für andere Zwecke, beispielsweise für ein ACC-System vorgesehen ist.

Bei einem Einsatz des erfindungsgemäßen Radarsensors in einem ACC-System bietet sich darüber hinaus die vorteilhafte Möglichkeit, die auf die Fahrbahnoberfläche gerichtete Radarkeule für eine kontinuierliche Überprüfung der Vertikaljustierung des Radarsensors zu nutzen. Eine korrekte Justierung des Radarsensors in der Vertikalen ist bei ACC-Systemen von hoher Bedeutung, weil die gewünschte Ortungstiefe des Sensors nur dann erreicht wird, wenn Radarkeulen präzise auf die Höhe der anderen Fahrzeuge, also etwa parallel zur Fahrbahnoberfläche, ausgerichtet sind. Andernfalls besteht die Gefahr, daß die Radarkeulen entweder, bei zu hoher Justierung, über weit entfernte Fahrzeuge hinwegstreichen oder, bei zu niedriger Justierung, auf den Boden auftreffen, bevor sie das weit entfernte Fahrzeug erreichen. Da mit Hilfe der auf die Fahrbahnoberfläche gerichteten Keule nicht nur die Absolutgeschwindigkeit des Fahrzeugs, sondern auch der Abstand gemessen werden kann, in dem diese Radarkeule auf die Fahrbahn auftrifft, läßt sich anhand dieses Abstands und der bekannten Höhe des Radarsensors über der Fahrbahnoberfläche die Winkeljustierung des Sensors überprüfen.

Des weiteren läßt sich mit Hilfe des erfindungsgemäßen Radarsensors auch die Genauigkeit und Zuverlässigkeit einer automatischen Blindheitserkennung des Sensors verbessern. Zwar vermögen die Radarwellen Regen und Nebel besser zu durchdringen als das menschliche Auge, doch kann gleichwohl aufgrund verschiedener Ursachen eine Erblindung des Radarsensors eintreten. Mögliche Ursachen für eine solche Erblindung sind neben der bereits erwähnten Fehljustierung des Sensors auch Fehler oder Ausfälle der Sensorelektronik sowie insbesondere Ablagerungen von Schnee, Matsch oder Eis auf der Radarantenne bzw. auf der Linse, die die Radarstrahlen bündelt. In DE 196 44 164 A1 und DE 199 45 268 A1 werden bereits Blindheitserkennungssysteme für ACC-Radarsensoren beschrieben. Bei dem in der letztgenannten Veröffentlichung beschriebenen System werden zu diesem Zweck die vom Radarsensor erfaßten Echos von vorausfahrenden Fahrzeugen und anderen Zielen auf der Fahrbahn oder am Fahrbahnrand ausgewertet. Ein Nachteil dieses Systems besteht jedoch darin, daß in einer sehr reflexionsarmen Umgebung, beispielsweise bei Fahrten auf einer wenig befahrenen Straße in Wüstengegenden, in denen sich auch keine Reflexionsziele am Fahrbahnrand finden, eine Erblindung des Sensors vorgetäuscht wird. Demgegenüber hat die Erfindung den Vorteil, daß das Radarecho von der Fahrbahnoberfläche praktisch immer vorhanden ist und überdies bei bekannter Intensität des ausgesandten Signals eine innerhalb gewisser Grenzen vorhersagbare Intensität aufweist. Wenn die Intensität des Echos von der Fahrbahnoberfläche anomal niedrige Werte annimmt, so ist dies ein sehr aussagekräftiger Indikator für eine Erblindung des Radarsensors. Da der die Fahrbahnoberfläche abtastende Kanal und die auf andere Fahrzeuge ansprechenden Kanäle in denselben Piadarsensor integriert sind, deutet ein Ausbleiben des Radarechos von der Fahrbahn mit hoher Wahrscheinlichkeit darauf hin, daß der Sensor als Ganzes erblindet ist.

Vorteilhafte Ausgestaltungen der Erfindung ergeben sich aus den Unteransprüchen.

In einer Ausführungsform wird die auf die Fahrbahnoberfläche gerichtete Keule durch eine zusätzliche Radarquelle, beispielsweise eine Patch-Antenne erzeugt, die oberhalb der optischen Achse des Sensors angeordnet ist und deren Strahl deshalb durch die Linse auf die Fahrbahnoberfläche abgelenkt wird. In diesem Fall wird auch das Echo von der Fahrbahnoberfläche vorwiegend von dem versetzt angeordneten Patch empfangen, so daß eine gezielte Auswertung dieses Signals erleichtert wird.

In einer anderen Ausführungsform wird aus dem von einer oder mehreren Radarquellen erzeugten, parallel zur Fahrbahnoberfläche gerichteten Radarstrahl mit Hilfe eines als Strahlteiler wirkenden Kondensors ein Teil auf die Fahrbahnoberfläche abgelenkt. Bei dem Kondensor kann es sich um eine speziell gestaltete Linse handeln, die ähnlich wie die Linse einer Bifokalbrille zwei Linsenzonen mit unterschiedlichen Brechungseigenschaften aufweist. Dasselbe kann selbstverständlich auch mit einem entsprechend gestalteten Reflektor erreicht werden. Die Auswertung des Radarechos von der Fahrbahnoberfläche erfolgt in diesen Fällen über die Kanäle, die auch zur Auswertung der Signale von anderen Radarzielen dienen.

Die Erfindung ist nicht auf eine bestimmte Bauform des Radarsensors und ein bestimmtes Sende/Empfangsprinzip beschränkt, sondern kann bei entsprechender Anpassung der Auswertungselektronik bzw. -software bei allen gängigen Sensortypen eingesetzt werden.

KURZBESCHREIBUNG DER ZEICHNUNGEN

Im folgenden werden Ausführungsbeispiele der Erfindung anhand der Zeichnung näher erläutert.

Es zeigen:

Fig. 1 eine schematische Darstellung eines erfindungsgemäßen Radarsensors;

Fig. 2 eine schematische Frontansicht des Radarsensors nach Figur 1;

Fig. 3 eine schematische Darstellung eines Radarsensors gemäß einer anderen Ausführungsform;

Fig. 4 eine schematische Frontansicht des Radarsensors nach Figur 3;

Fig. 5 eine Skizze zur Illustration eines Verfahrens zur Messung der Fahrzeuggeschwindigkeit und der Vertikaljustierung des Radarsensors;

Fig. 6 ein Frequenz/Zeit-Diagramm zur Erläuterung des Meßprinzips eines FMCW-Sensors; und

Fig. 7 ein Intensitäts/Frequenz-Diagramm zur Erläuterung der Auswertung der empfangenen Signale bei einem FMCW-Radar.

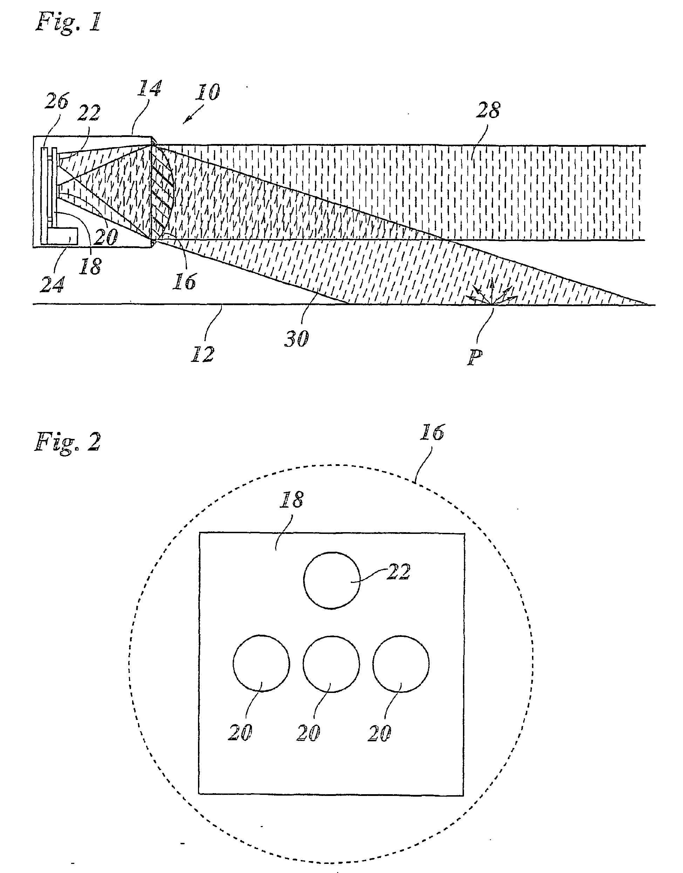

Der in Figur 1 gezeigte Radarsensor 10 ist an der Vorderseite eines nicht gezeigten Kraftfahrzeugs in einem bestimmten Abstand oberhalb der Fahrbahnoberfläche 12 installiert und weist ein Gehäuse 14 auf, das an der Vorderseite durch eine Linse 16 (Kondensorelement) aus einem für Radarwellen transparenten Kunststoff abgeschlossen ist. Innerhalb des Gehäuses 14 sind auf einem Substrat 18 annähernd in der Brennebene der Linse 16 mehrere sogenannte Patches 20, 22 angeordnet, die als Radarquellen dienen und über Mikrowwellenleiter von einem Mikrowellenoszillator 24 gespeist werden.

Im gezeigten Beispiel dienen die Patches 20, 22 zugleich als Empfangsantennen für das Radarecho. Die empfangenen Signale werden von einer Auswertungselektronik ausgewertet, die auf einer Platine 26 hinter dem Substrat 18 angeordnet ist.

In Figur 2 ist die Anordnung der Patches 20. 22 auf dem Substrat 18 dargestellt. Der Umriß der Linse 16 ist gestrichelt eingezeichnet. Drei Patches 20 sind auf einer waagerechten, also parallel zur Fahrbahnoberfläche 12 verlaufenden Linie nebeneinander angeordnet: Das mittlere dieser Patches 20 ist auf die optische Achse der Linse 16 zentriert. Das Patch 22 ist dagegen versetzt oberhalb dieser optischen Achse angeordnet. Für die Sendefunktion des Radarsensors 10 dient die Linse 16 als Kondensor, der die von den Patches 20, 22 emittierte divergente Darstrahlung bündelt. Jedes der Patches 20 erzeugt daher eine Keule 28 in der Form eines annähernd parallelen Strahlenbündels, das parallel zur Fahrbahnoberfläche 12 gerichtet ist. Das Patch 22 erzeugt dagegen eine Keule 30, wiederum in der Form eines annähernd parallelen Strahlenbündels, die schräg auf die Fahrbahnoberfläche 12 gerichtet ist.

Aufgrund der Abbildungseigenschaften der Linse 16 sind auch die drei von den Patches 20 erzeugten Keulen 28 in der waagerechten Ebene gegeneinander winkelversetzt. Nur die Keule 28 des mittleren Patches 20 ist auf die optische Achse der Linse 16 zentriert, während die Achsen der von den seitlichen Patches 20 erzeugten Keulen etwas divergieren. Die drei Keulen 28 überlappen einander und bilden so ein Mehrstrahlradar mit einem in der Breite aufgefächerten Ortungsbereich. Die drei Keulen 28 dienen zur Erfassung von vorausfahrenden Fahrzeugen auf der eigenen Fahrspur und auf den Nachbarspuren. Wenn in dieser Anmeldung vereinfachend gesagt wird, daß die Keulen 28 "parallel zur Fahrbahnoberfläche" gerichtet sind, so ist damit gemeint, daß der Neigungswinkel der Keulen 28 für die Erfassung von Fahrzeugen in einem für die Abstandsmessung relevanten Ortungsbereich optimiert ist.

Wenn die Radarwellen der überlappenden Keulen 28 von einem Radarobjekt reflektiert werden, so läßt sich durch Vergleich der Intensitäten der von den drei Patches 20 empfangenen reflektierten Wellen zumindest näherungsweise die Richtung des Radarziels bestimmen. Auf diese Weise kann beispielsweise zwischen einem vorausfahrenden Fahrzeug auf der eigenen Fahrspur und Fahrzeugen auf Nebenspuren unterschieden werden. Je nach Abstand und Fahrbahnkrümmung können die Keulen 28 aber auch Radarziele am Fahrbahnrand erfassen.

Die von dem Patch 22 erzeugte Keule 30 trifft in relativ kurzem Abstand vor dem Fahrzeug auf die Fahrbahnoberfläche 12. Da die Fahrbahnoberfläche eine gewisse Rauhigkeit aufweist, werden die Radarwellen in unterschiedliche Richtungen reflektiert. Ein Teil der reflektierten Radarwellen fällt wieder auf die Linse 16 zurück und wird vom Patch 22 empfangen. Anhand der Laufzeit und der Dopplerverschiebung des von dem Patch 22 empfangenen Radarechos lassen sich daher der Abstand zwischen dem Radarsensor 10 und dem ungefähren Auftreffpunkt P der Keule 30 auf die Fahrbahnoberfläche 12 sowie die Komponente der Geschwindigkeit des Fahrzeugs (des Radarsensors 10) relativ zur Fahrbahnoberfläche 12 längs der Achse der Keule 30 bestimmen. Die Auswertung dieser Information wird später noch näher erläutert werden.

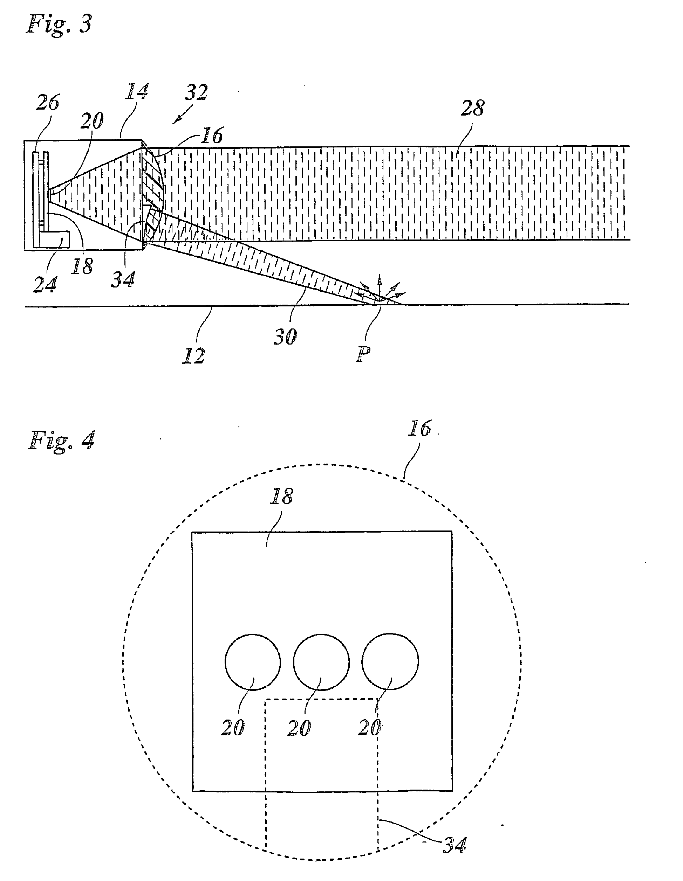

Figuren 3 und 4 illustrieren als weiteres Ausführungsbeispiel einen Radarsensor 32, der nur die drei auf einer waagerechten Linie angeordneten Patches 20 aufweist. Zur Erzeugung der schräg auf die Fahrbahnoberfläche 12 gerichteten Keule 30 weist hier die Linse 16, die insgesamt als Plankonvexlinse ausgebildet ist, auf der planen Seite eine Ausnehmung auf, die eine Linsenzone 34 mit einem vom Rest der Linse abweichenden Brechungsverhalten definiert. Die Linsenzone 34 wirkt nicht nur als Sammellinse (hier mit einer vom Rest der Linse verschiedenen Brennweite), sondern auch als Prisma, durch das ein Teil der von den Patches 20 emittierten Radarstrahlung gebrochen und auf die Fahrbahnoberfläche 12 abgelenkt wird.

Wie Figur 4 zeigt, ist die Linsenzone 34 nur im mittleren Bereich der Linse 16 ausgebildet, so daß sie speziell von der Strahlung des mittleren Patches 20 getroffen wird. Die am Auftreffpunkt P von der Fahrbahnoberfläche 12 reflektierte Radarstrahlung wird durch die prismenartige Linsenzone 34 wieder auf das mittlere Patch 20 fokussiert.

Der größere Teil der von dem mittleren Patch 20 emittierten Radarstrahlung bildet aber die mittlere der parallel zur Fahrbahnoberfläche gerichteten Keulen 28. Wenn diese Keule auf ein Radarziel, beispielsweise ein vorausfahrendes Fahrzeug trifft, erhält man daher bei Auswertung des Signals des mittleren Patches 20 insgesamt Ortungssignale für zwei Objekte, nämlich für das vorausfahrende Fahrzeug und für die Fahrbahnoberfläche im Punkt P. Wenn die mittlere Keule 28 noch weitere Radarziele trifft, wird bei Auswertung des Signals des mittleren Patches 20 eine entsprechend größere Anzahl von Objekten geortet. Die Auswertungselektronik des Radarsensors 32 ist wie bei herkömmlichen Radarsensoren dazu ausgebildet, mehrere Radarziele, auch wenn sie mit derselben Keule erfaßt werden, zu unterscheiden und ihre Abstände und Relativgeschwindigkeiten gesondert zu bestimmen. So ist es auch mit dem Radarsensor 32 möglich, den Abstand des Auftreffpunktes P und die zugehörige Relativgeschwindigkeit zu messen. Bei der Bestimmung der Richtung von Radarzielen, die von den Keulen 28 getroffen werden, ist hier allerdings zu berücksichtigen, daß die Intensität der mittleren Keule 28 geschwächt ist, weil ein Teil der Strahlung in die Keule 30 abgelenkt wird.

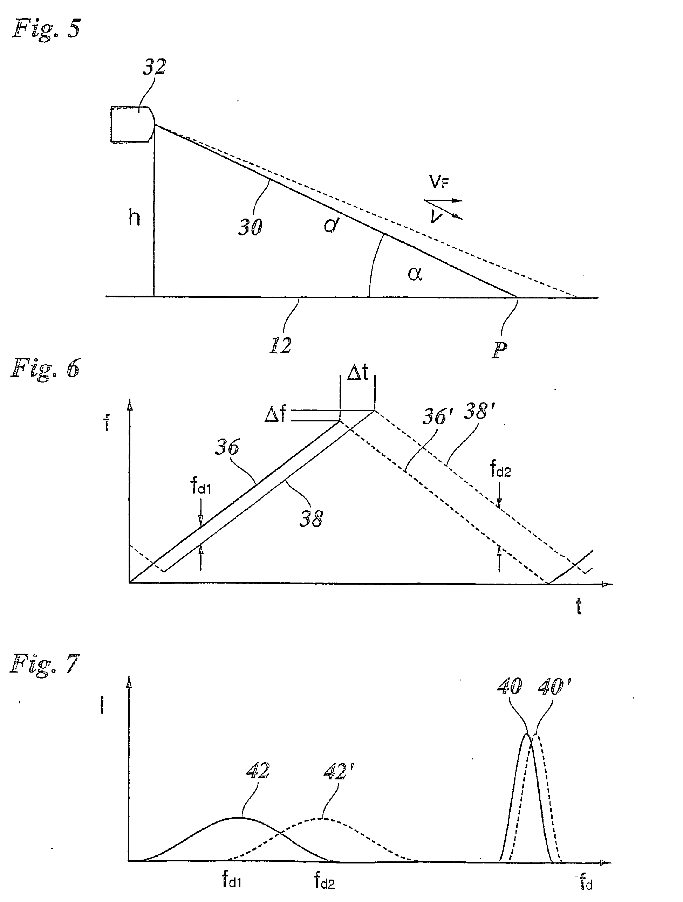

Die Auswertung der mit Hilfe der Keule 30 gewonnenen Information soll nun unter Bezugnahme auf Figuren 5 erläutert werden.

Anhand des Doppler-Effektes läßt sich direkt die Geschwindigkeit v des Radarsensors 10 relativ zur Fahrbahnoberfläche 12 in der Richtung parallel zur Achse der Keule 30 messen. Da diese Richtung jedoch mit der Horizontalen den Winkel $\alpha$ bildet, ist der Betrag von v nicht genau mit der Geschwindigkeit vF des Fahrzeugs über Grund identisch.

Ein genauerer Wert für $v_F$ läßt sich auf die folgende Weise erhalten. Die Höhe h des Radarsensors 10 oberhalb der Fahrbahnoberfläche 12 ist durch den Anbringungsort des Radarsensors 10 am Fahrzeug bestimmt und ist daher relativ genau bekannt. Der Abstand d zwischen dem Radarsensor 10 und dem Auftreffpunkt P längs der Sichtlinie, also längs der Achse der Keule 30, läßt sich aus der Laufzeit des Radarechos bestimmen. Es gilt dann:

$$\alpha = \sin^{-1}(h/d)$$

und

$$vF = v \cos \alpha.$$

In der Praxis wird die Ablenkung der Keule 30 in Abhängigkeit von der Höhe h so gewählt, daß die Keule 30 in einem relativ kurzen Abstand auf die Fahrbahnoberfläche 12 auftrifft, so daß sichergestellt ist, daß das von der Keule 30 erzeugte Echo wirklich von der Fahrbahnoberfläche und nicht etwa von beweglichen Radarzielen stammt. Bei einer solchen Wahl des Auftreffpunktes P wird zugleich auch der Auftreffwinkel $\alpha$ so groß sein, daß die von der Fahrbahnoberfläche zum Radarsensor 10 zurück reflektierten Radarwellen an eine hinreichend große Intensität haben.

Die Messung des Abstands d läßt sich auch noch auf andere Weise nutzen. Wie in Figur 5 gestrichelt angedeutet ist, reagiert der Abstand d relativ empfindlich auf eine Fehljustierung des Radarsensors 10 bezüglich der Neigung in der Vertikalen. Eine solche Fehljustierung kann, wie bereits ausführt wurde, bei einem Radarsensor für ein ACC-System zu einer Abnahme der Ortungstiefe für vorausfahrende Fahrzeuge führen, bis hin zur völligen Erblindung des Radarsensors. Der normale Abstand d, der einer korrekten Justierung des Radarsensors entspricht, ist für ein gegebenes Fahrzeug bekannt, da er eindeutig durch die Höhe h und den Winkel zwischen den Keulen 28 und 30 bestimmt ist. Während der Fahrt wird der gemessene Abstand d etwas um den Normalwert schwanken, da die Fahrbahnoberfläche 12 nicht immer eben sein wird, sondern Kuppen und Mulden aufweisen kann, und da aufgrund von Federbewegungen des Fahrzeugaufbaus auch die Höhe h und die Neigung des Sensors schwanken. Bei fortlaufender Messung des Abstands d muß jedoch bei korrekter Justierung des Sensors der Mittelwert der gemessenen Abstände dem Normalwert entsprechen. Wenn sich langfristig eine Abweichung des Mittelwertes von dem Normalwert zeigt, so läßt dies eine Fehljustierung des Radarsensors 10 erkennen, so daß entweder eine automatische Nachjustierung oder ein Warnhinweis an den Fahrer oder ggf. eine Abschaltung des ACC-Systems erfolgen kann.

Darüber hinaus kann die Auswertung des von der Fahrbahnoberfläche 12 empfangenen Radarechos generell für eine Blindheitserkennung des Radarsensors 10 genutzt werden, auch wenn die Blindheit nicht durch Fehljustierung, sondern durch andere Ursachen bedingt ist, beispielsweise durch einen Ausfall der Auswertungselektronik oder durch eine störende Schmutz-, Schnee- oder Eiskruste auf der Linse 16. In diesen Fällen wird das Radarecho von der Fahrbahnoberfläche 12 wie auch die Radarechos von anderen Radarzielen entweder ganz ausbleiben oder instabil werden oder erheblich gedämpft werden. Bei den mit den Keulen 28 erfaßbaren Radarzielen auf der Fahrbahn oder am Fahrbahnrand läßt sich jedoch nicht entscheiden, ob das Ausbleiben der Signale auf eine Erblindung des Sensors zurückzuführen ist oder einfach daran liegt, daß keine Radarziele vorhanden sind. Die Reflexionen von der Fahrbahnoberfläche 12 haben dagegen den Vorteil, daß ihr Vorhandensein eigentlich immer unterstellt werden kann. Das Ausbleiben oder die Dämpfung dieser Reflexionen stellt daher - ggf. in Verbindung mit anderen Indikatoren - einen wichtigen Indikator für die Erblindung des Radarsensors 10 dar.

In Figuren 6 und 7 ist am Beispiel eines FMCW-Radars (Frequency Modulated Continuous Wave) die Auswertung der Radarsignale im Hinblick auf eine Blindheitserkennung illustriert. Bei einem solchen Radarsystem werden die Radarwellen fortlaufend, jedoch mit variabler Frequenz, vom Radarsensor 32 emittiert. In Figur 6 gibt die fett eingezeichnete Kurve 36, 36' die Zeitabhängigkeit der Frequenz f der von den Patches 20 emittierten Radarwellen an. Die Frequenz f wird periodisch variiert gemäß einer Rampenfunktion mit einer ansteigenden Rampe 36 (durchgehende Linie) und einer abfallenden Rampe 36' (gestrichelt). Die Frequenzkurve 38, 38' für das zugehörige Radarecho von der Fahrbahnoberfläche 12 ist in Figur 6 in dünneren Linien dargestellt. Diese Kurve weist die gleichen Rampen 38 und 38' auf, jedoch mit einem Zeitversatz $\Delta t$, der durch den Objektabstand gegeben ist, und mit einem Frequenzversatz $\Delta f$, der durch die Dopplerverschiebung bestimmt ist.

Im Radarsensor 32 wird für jedes Patch die ausgesandte Welle mit dem empfangenen Radarecho gemischt, so daß man ein Schwebungssignal mit einer Frequenz $f_d$ enthält, die dem Frequenzunterschied zwischen den emittierten Wellen und den empfangenen Wellen entspricht. Durch Schnelle Fouriertransformation wird aus diesem Schwebungssignal das Frequenzspektrum gebildet.

Figur 7 zeigt in durchgezogenen und gestrichelten Linien ein Beispiel für zwei Frequenzspektren, die etwa mit dem mittleren Patch 20 in Figur 4 erhalten werden könnten, wenn sich ein einzelnes vorausfahrendes Fahrzeug im Ortungsbereich der Keule 28 befindet. Die Differenzfrequenz $f_d$ hat dann einen relativ scharfen Peak 40 bzw. 40' für das Echo von der Keule 28, also vom vorausfahrenden Fahrzeug, und einen flacheren und breiteren Peak 42 bzw. 42' für das Echo von der Keule 30, also von der Fahrbahnoberfläche 12. Die in durchgezogenen Linien dargestellten Peaks 40, 42 erhält man während der ansteigenden Rampe 36 des emittierten Signals, und die gestrichelt eingezeichneten Peaks 40', 42' erhält man während der abfallenden Rampe 36' des emittierten Signals. Die Differenzfrequenz $f_d$ ist maßgeblich von dem Produkt aus dem Zeitversatz $\Delta t$ (Signallaufzeit) und der Rampensteigung abhängig, wird jedoch während der ansteigenden Flanke 36 um die Dopplerfrequenz vermindert, während der abfallenden Flanke 36' hingegen um die Dopplerfrequenz vergrößert (bei positiver Dopplerverschiebung zu größeren Frequenzen, entsprechend einer Annäherung des Radarziels). Der Mittelwert der Frequenzen $f_{d1}$ und $f_{d2}$, bei denen die beiden Peaks 42, 42' in Figur 7 liegen, entspricht daher der Signallaufzeit und gibt somit den Abstand d an, während die Hälfte der Differenz zwischen diesen beiden Frequenzen die Dopplerverschiebung und damit Betrag und Vorzeichen der Geschwindigkeit v angibt. Eine entsprechende Beziehung gilt für die Frequenzen der Peaks 40, 40' und den Abstand und die Relativgeschwindigkeit des vorausfahrenden Fahrzeugs.

Eine Unterscheidung zwischen den gleichzeitig empfangenen Peaks 40, 42 bzw. 40', 42' wird dadurch erleichtert, daß ein von der Keule 28 erhaltener Peak größeren Objektabständen und somit größeren Differenzfrequenzen entspricht, während die Keule 30 schon in geringem Abstand auf die Fahrbahnoberfläche trifft. Bei vorausfahrenden Fahrzeugen wird außerdem die Relativgeschwindigkeit und damit die Dopplerverschiebung kleiner sein, während bei den Peaks 42, 42' die Dopplerverschiebung der Absolutgeschwindigkeit des Fahrzeugs über Grund entspricht. Weiterhin sind die Peaks 42, 42' flacher und breiter, weil das Echo von der rauhen Fahrbahnoberfläche 12 generell relativ schwach ist und weil diese Fahrbahnoberfläche außerdem kein scharf lokalisiertes, sondern ein räumlich verteiltes Reflexionsziel darstellt. Wenn die Keule 28 mehrere Radarziele erfaßt, können sich Mehrdeutigkeiten ergeben, die in der Praxis dadurch eliminiert werden, daß man die Rampensteigungen periodisch variiert.

Die Gesamtintensität, d.h., die über sämtliche Frequenzen $f_d$ aufintegrierte Intensität des Peaks 42 (oder 42'), variiert in Abhängigkeit von der Beschaffenheit der Fahrbahnoberfläche 12, wird aber innerhalb einer gewissen Schwankungsbreite proportional zu der Intensität der emittierten Radarwellen sein, sofern die Radarwellen ungestört gesendet und empfangen werden. Durch einen Vergleich dieser Gesamtintensität des Peaks 42 oder 42' mit einem geeignet gewählten, ggf. in Abhängigkeit von den Betriebsbedingungen variablen Schwellenwert läßt sich daher mit hoher Zuverlässigkeit eine Erblindung des Radarsensors feststellen.

Im Hinblick auf eine möglichst hohe Signalintensität und Schärfe des Peaks 42, ist es zweckmäßig, die Keule 30 möglichst schmal auszulegen oder auf den voraussichtlichen Auftreffpunkt P zu fokussieren. Dies läßt sich etwa bei der Ausführungsform des Radarsensors 32 nach Figur 3 dadurch erreichen, daß für die Linsenzone 34 eine etwas kleinere Brennweite als für den Rest der Linse gewählt wird. Durch diese Maßnahme wird auch die Genauigkeit bei der Bestimmung des Dejustagewinkels verbessert. Bei den Radarsensor 10 nach Figur 1 kann eine entsprechende Fokussierung der Keule 30 durch eine zusätzliche Linse im Strahlengang des Patches 22 erreicht werden.

## Patentansprüche

1.  Radarsensor für Kraftfahrzeuge, mit einer Sende- und Empfangseinrichtung (16, 20, 22), deren Richtcharakteristik mehrere Keulen (28, 30) aufweist, von denen mindestens eine Keule (28) parallel zur Fahrbahnoberfläche (12) gerichtet ist, welche durch eine von drei Patchantennen (20) erzeugt wird, wobei die drei Patchantennen (20) auf einer waagerechten Linie, die parallel zur Fahrbahnoberfläche verläuft, nebeneinander angeordnet sind, **dadurch gekennzeichnet, daß** mindestens eine andere Keule (30) schräg auf die Fahrbahnoberfläche gerichtet ist, die durch eine weitere Patchantenne (22) erzeugt wird, die außerhalb der waagerechten Linie so angeordnet ist, dass sie oberhalb der drei Patchantennen (20) angeordnet ist.

2.  Radarsensor nach Anspruch 1, **gekennzeichnet durch** ein Kondenserelement in der Form einer Linse (16) oder eines Reflektors, das die emittierten Radarwellen in die Keulen (28, 30) bündelt.

3.  Radarsensor nach Anspruch 2, **dadurch gekennzeichnet, daß** die Sende- und Empfangseinrichtung mehrere Patchantennen (20, 22) aufweist die versetzt zueinander annähernd in der Brennebene des gemeinsamen Kondensorelements (16) angeordnet sind und von denen eine (22) die schräg auf die Fahrbahnoberfläche (12) gerichtete Keule (30) erzeugt.

## Claims

1.  Radar sensor for motor vehicles, having a transmitting and receiving device (16, 20, 22), whose directional characteristic has a plurality of lobes (28, 30), at least one lobe (28) of which points parallel to the roadway surface (12) and is produced by one of three patch antennas (20), with the three patch antennas (20) being arranged alongside one another on a horizontal line which runs parallel to the roadway surface, **characterized in that** at least one other lobe (30) points obliquely towards the roadway surface and is produced by a further patch antenna (22), which is arranged off the horizontal line in such a way that it is arranged above the three patch antennas (20).

2.  Radar sensor according to Claim 1, **characterized by** a condenser element in the form of a lens (16) or of a reflector which focuses the emitted radar waves into the lobes (28, 30).

3.  Radar sensor according to claim 2, **characterized in that** the transmitting and receiving device has a plurality of patch antennas (20, 22) which are arranged offset with respect to one another approximately on the focal plane of the common condenser element (16), and one (22) of which produces the lobe (30) which points obliquely towards the roadway surface (12).

## Revendications

1.  Détecteur radar pour véhicules automobiles avec un dispositif d'émission et de réception (16, 20, 22) dont la caractéristique de direction présente plusieurs lobes (28, 30) dont au moins un lobe (28) est dirigé parallèlement à la surface de la route (12), et généré par une des trois antennes patch (20), les trois antennes patch (20) étant disposées les unes à côté des autres sur une ligne horizontale parallèle à la surface de la route,
    **caractérisé en ce qu'**
    au moins un autre lobe (30) est dirigé en biais sur la surface de la route et créée par une autre antenne (22) disposée en dehors de la ligne horizontale de manière à se trouver au-dessus des trois antennes patch (20).

2.  Détecteur radar selon la revendication 1,
    **caractérisé par**
    un élément condenseur sous la forme d'une lentille (16) ou d'un réflecteur qui regroupe dans les lobes (28, 30) les ondes radar émises.

**3.** Détecteur radar selon la revendication 2, **caractérisé en ce que** le dispositif d'émission et de réception présente plusieurs antennes patch (20, 22) décalées les unes des autres approximativement dans un plan focal de l'élément condenseur commun (16) et dont une (22) génère un lobe (30) dirigé en biais sur la surface de la route (12).

*Fig. 1*

*Fig. 2*

Fig. 3

Fig. 4

*Fig. 5*

*Fig. 6*

*Fig. 7*